# DEMANDE DE BREVET EUROPEEN

(11) **EP 4 613 469 A1**
(43) Date de publication de la demande: **10.09.2025**
(21) Numéro de dépôt: 25160481.5
(22) Date de dépôt: 27.02.2025
(51) Int. Cl.: B29D 30/00, B29D 30/06

(54) **MÉTHODE ET UN SYSTÈM POUR LA PRÉPARATION D`UN PNEUMATIQUE**

(30) Priorité: 07.03.2024 FR 2402316
(71) Demandeur: Goodyear France s.a.s., 92400 Courbevoie (FR)
(72) Inventeur: AUDIBERT, Luc, L-9028 Warken (LU); REICHLING, Jean, L-8156 Bridel (LU)
(74) Mandataire: Kutsch, Bernd

(57) **Abrégé**

La présente invention concerne une méthode pour la préparation d'un pneumatique comprenant un contrôle qualité en mesurant l'équilibre dynamique d'un pneumatique non vulcanisé et un système ou une usine pour la préparation de pneumatiques afin de réaliser la méthode selon la présente invention.

## Description

La présente invention concerne une méthode pour la préparation d'un pneumatique comprenant un contrôle qualité en mesurant l'équilibre dynamique d'un pneumatique non vulcanisé et un système ou une usine pour la préparation de pneumatiques afin de réaliser la méthode selon la présente invention.

Dans l'industrie du pneumatique, il est important de répondre au mieux et le plus rapidement possible au besoin des constructeurs automobiles, en particulier en vue du passage aux véhicules électriques. C'est pourquoi développer de nouvelles méthodes de préparation de pneumatiques est essentielle afin de s'adapter aux besoins et aux dernières règlementations. Même si au cours des dernières années différentes méthodes ont été développées, il y a toujours le besoin de développer de nouvelles méthodes notamment pour l'optimisation des étapes de fabrication et l'augmentation de la qualité des pneumatiques.

En particulier, il a été découvert qu'avec la méthode selon la présente invention il était possible de préparer des pneumatiques améliorés notamment grâce à un contrôle qualité de pneumatique non vulcanisé visant à corriger des imperfections si présentes avant sa vulcanisation. En effet, cela permet de réduire les effets défavorables des pneumatiques lors de la conduite d'un véhicule comme les vibrations ou les problèmes de stabilité par exemple dus aux imperfections d'équilibre et uniformité de pneumatiques.

Ainsi, la présente invention concerne une méthode pour la préparation d'un pneumatique, la méthode comprenant :
(a) préparer un pneumatique non vulcanisé, comprenant l'assemblage des composants de pneumatique sur un tambour de fabrication de pneumatique ;
(b) apposer un repère ou un repère matérialisé R sur le pneumatique non vulcanisé préparé selon (a), obtenant un pneumatique marqué non vulcanisé ;
(c) mise en place du pneumatique marqué non vulcanisé obtenu selon (b) dans un moule M de pneumatique, comprenant
(c.1) opérer un contrôle de la qualité du pneumatique marqué non vulcanisé obtenu selon (b), comprenant
(c.1.1) la mesure de l'équilibre dynamique du pneumatique marqué non vulcanisé avec un appareil de mesure, comprenant l'identification de potentiels imperfections d'équilibre sur ledit pneumatique marqué non vulcanisé ;
(c.1.2) la classification du pneumatique marqué non vulcanisé sur la base de la mesure de l'équilibre dynamique selon (c.1.1) en au moins trois catégories, de préférence en trois catégories :
   - une catégorie 1 lorsque le pneumatique marqué non vulcanisé est conforme aux limites des spécifications et ne présente pas d'imperfection d'équilibre, ou présente une ou plusieurs imperfections d'équilibre qui ne nécessitent cependant pas de correction ;
   - une catégorie 2 lorsque le pneumatique marqué non vulcanisé est conforme aux limites des spécifications mais présente une ou plusieurs imperfections d'équilibre pour lesquelles il convient de faire une correction ;
   - une catégorie 3 lorsque le pneumatique marqué non vulcanisé est non conforme aux limites des spécifications et présente une ou plusieurs imperfections d'équilibre qui nécessitent correction ;
dans laquelle (c) comprend en outre
(c.2) comprenant
   - lorsque le pneumatique non vulcanisé a été classifié dans la catégorie 1, positionner le pneumatique marqué non vulcanisé dans le moule M de pneumatique en vue d'opérer (d) ;
   - lorsque le pneumatique non vulcanisé a été classifié dans la catégorie 2, déterminer un positionnement du pneumatique marqué non vulcanisé dans le moule de pneumatique pour compenser au moins partiellement l'une ou plusieurs imperfections d'équilibre de ce pneumatique, positionner en conséquence le pneumatique dans le moule M de pneumatique en vue d'opérer (d) ;
   - lorsque le pneumatique non vulcanisé a été classifié dans la catégorie 3, opérer un équilibrage dynamique en ajoutant ou en retirant un ou plusieurs éléments de gomme, pouvant être une ou plusieurs bandes de gomme, sur le pneumatique marqué non vulcanisé, obtenant un pneumatique modifié marqué non vulcanisé, et opérer (c.1) sur le pneumatique modifié marqué non vulcanisé ;
(d) la vulcanisation du pneumatique marqué non vulcanisé placé selon (c) dans le moule M.

De préférence les composants de pneumatique comprenant une carcasse de pneumatique, des flancs de pneumatique et une bande de roulement, l'assemblage comprenant la mise en place de la carcasse sur le tambour de fabrication et la mise en place des flancs et de la bande de roulement sur la carcasse, les mises en place se faisant par rapport à un point de référence défini sur le tambour.

De préférence les composants de pneumatique comprennent en outre une ou plusieurs parmi une ou plusieurs ceintures, et des épaulements.

De préférence la méthode comprend en outre la fourniture des composants de pneumatique utilisés selon (a) comprenant la préparation des composants de pneumatique, plus préférablement la préparation des composants de carcasse, la préparation des flancs et la préparation de la bande de roulement.

De préférence la préparation des composants de pneumatique comprend l'utilisation de plusieurs unités de préparation de pneumatiques non vulcanisés, les unités de préparation étant connectées les unes aux autres par un réseau, le réseau étant plus préférablement un réseau interne, par exemple un intranet, ou un réseau externe.

De préférence selon (a) l'assemblage des composants de pneumatique est automatisé.

De préférence (a) comprend en outre le gonflage du pneumatique non vulcanisé sur le tambour de fabrication afin d'obtenir une forme toroïdale.

De préférence selon (a), le point de référence est sur le tambour de fabrication. De préférence, lors de la mise en place de la bande de roulement sur la carcasse, un joint est formé. Selon une alternative, le point de référence est le joint formé sur le pneumatique.

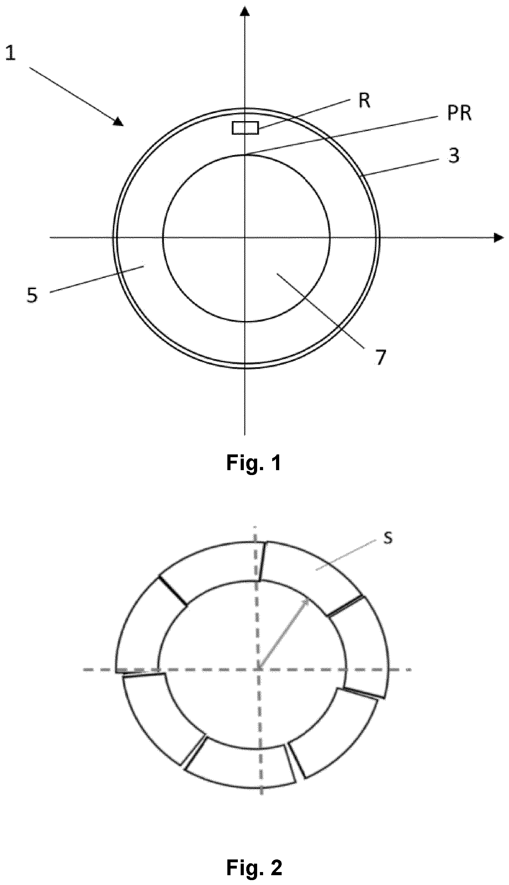

De préférence l'apposition d'un repère ou d'un repère matérialisé R selon (b) se fait sur un des flancs du pneumatique non vulcanisé préparé selon (a), plus préférablement à une distance d1 dudit point de référence. Un exemple de placement du repère R est illustré à la FIG. 1.

De préférence, l'apposition d'un repère matérialisé R selon (ii) se fait à une distance d1 dudit point de référence. La distance d1 est de préférence pratiquement invariable, en effet il existe une marge d'erreur de l'ordre du ½ millimètre au maximum. Cela permet que le repère R soit apposé au même endroit du pneumatique pour chaque pneumatique fabriqué.

De préférence l'apposition d'un repère matérialisé R selon (b) est automatisée.

De préférence le repère matérialisé R est une étiquette avec un code barre ou un QR code. De préférence, le code barre ou le QR code est unique pour chaque pneumatique.

De préférence la méthode comprend l'association des données, plus préférablement dans un système informatique, sur le contrôle qualité opéré selon (c.1) au repère R, étant une étiquette avec code barre ou un QR code. Le système informatique pouvant être un réseau interne type intranet.

De préférence, l'étiquette est scannée avant chaque nouvelle étape pour que le ou les renseignements sur la fabrication soient liés et enregistrés sur l'étiquette de ce pneumatique.

De préférence, le code barre ou le QR code est généré pour chaque pneumatique et contient un ou plusieurs renseignements sur la composition du pneumatique, en particulier un ou plusieurs renseignements sur les composants utilisés pour former le pneumatique et/ou sur la composition chimique des composants utilisés pour le pneumatique. Ceci permet d'augmenter la traçabilité des pneumatiques d'une usine.

De préférence avant (c.1), la méthode comprend en outre la lecture du code barre ou QR code de l'étiquette avant d'opérer (c). Cela permet d'identifier le pneumatique marqué non vulcanisé avant son contrôle qualité et ce qui permet aussi de mettre à jour les renseignements associés à cette étiquette sur le contrôle qualité de ce pneumatique au fur et à mesure du procédé de fabrication.

Cela permet d'identifier le pneumatique à contrôler de manière individualisée et non plus seulement par lot. Les données obtenues selon (c), comme celles de la classification selon (c.1) et/ou les données obtenues selon (c.0) décrit ici, sont associées au code barre ou QR code du pneumatique dans un système de traitement.

De préférence, l'étiquette avec un code barre ou un QR code comprend un ou plusieurs renseignements sur les composants de pneumatique utilisés selon (a).

En effet, dans le contexte de la présente demande, l'étiquette est un moyen d'identification propre à chaque pneumatique fabriqué selon la présente invention, elle comprend, ou est associé dans un système de traitement à, des informations sur les différentes étapes de fabrications, d'analyse et/ou de contrôle qualité. A l'inverse des procédés de l'art antérieur, l'optimisation du procédé de préparation de pneumatiques et de la qualité des pneumatiques obtenus se fait non plus par lot mais individuellement.

De préférence l'apposition d'un repère matérialisé R selon (b) se fait sur le pneumatique non vulcanisé préparé selon (a), le pneumatique étant positionné sur le tambour de fabrication.

De préférence l'appareil de mesure utilisé selon (c.1.1) comprend un bras robotisé ou le tambour de fabrication de pneumatique. En effet, la mesure de l'équilibre dynamique peut se faire sur le bras robotisé ou directement sur le tambour de fabrication.

De préférence l'appareil de mesure de l'équilibre dynamique est un bras robotisé, ce bras robotisé étant aussi utilisé pour la manutention du pneumatique marqué non vulcanisé et/ou le positionnement dans le moule M, ou dans un espace de stockage intermédiaire.

De préférence le bras robotisé est rotatif et comprend un ou plusieurs capteurs permettant de déterminer le balourd du pneumatique marqué non vulcanisé.

De préférence l'appareil de mesure utilisé selon (c.1.1) comprend en outre un moyen de traitement des mesures effectués par un ou plusieurs capteurs, de préférence l'un ou plusieurs capteurs définis dans la présente invention, pour la classification selon (c.1.2) du pneumatique marqué.

De préférence, lorsqu'un bras robotisé est utilisé selon (c.1.1), la méthode comprend le retrait du pneumatique marqué non vulcanisé, son dépôt sur un convoyeur (tapis roulant) et la prise en charge du pneumatique avec ledit bras robotisé.

Dans le contexte de la présente invention, les termes « balourd » et « imperfection d'équilibrage » peuvent être utilisés de manière interchangeable.

L'équilibre dynamique peut être mesuré selon les méthodes connues de l'homme du métier. Par exemple, les méthodes décrites dans EP 0 412 885 A1 et FR 2 573 206 A1.

De préférence l'ajout ou le retrait de l'un ou plusieurs éléments de gomme, comme une ou plusieurs bandes de gomme, lors de l'équilibrage dynamique se fait sur la surface externe, notamment pour les pneumatiques de voitures, et/ou sur la surface interne du pneumatique, notamment pour les pneumatiques pour l'aviation.

### Variation de force radiale et mesure d'équilibre dynamique

De préférence (c) comprend en outre
(c.0) la détermination d'une variation de force radiale du pneumatique marqué non vulcanisé aux différentes positions circonférentielles de ce pneumatique, mesurées en degré, par rapport au repère R sur le pneumatique marqué non vulcanisé, obtenant des données sur la variation de force radiale du pneumatique non vulcanisé par rapport aux positions circonférentielles; dans laquelle (c.0) est opéré avant (c.1). Les données sur la variation de force radiale peuvent être compilées sous forme de courbe.

De préférence (c) comprend
(c.0) la détermination d'une variation de force radiale du pneumatique marqué non vulcanisé aux différentes positions circonférentielles de ce pneumatique, mesurées en degré, par rapport au repère R sur le pneumatique marqué non vulcanisé, obtenant des données sur la variation de force radiale du pneumatique non vulcanisé par rapport aux positions circonférentielles;
(c.1) opérer un contrôle de la qualité du pneumatique marqué non vulcanisé obtenu selon (b), comprenant
(c.1.1) la mesure de l'équilibre dynamique du pneumatique marqué non vulcanisé avec un appareil de mesure, comprenant l'identification de potentiels imperfections d'équilibre sur ledit pneumatique marqué non vulcanisé ;
(c.1.2) la classification du pneumatique marqué non vulcanisé sur la base de la mesure de l'équilibre dynamique selon (c.1.1) en au moins trois catégories, plus préférablement en trois catégories :
   - une catégorie 1 lorsque le pneumatique marqué non vulcanisé est conforme aux limites des spécifications et ne présente pas d'imperfection d'équilibre, ou présente une ou plusieurs imperfections d'équilibre qui ne nécessitent cependant pas de correction ;
   - une catégorie 2 lorsque le pneumatique marqué non vulcanisé est conforme aux limites des spécifications mais présente une ou plusieurs imperfections d'équilibre pour lesquelles il convient de faire une correction ;
   - une catégorie 3 lorsque le pneumatique marqué non vulcanisé est non conforme aux limites des spécifications et présente une ou plusieurs imperfections d'équilibre qui nécessitent correction ;
(c.2) comprenant
   - lorsque le pneumatique non vulcanisé a été classifié dans la catégorie 1, (i) positionner le pneumatique marqué non vulcanisé dans le moule de pneumatique en vue d'opérer (d) ;
   - lorsque le pneumatique non vulcanisé a été classifié dans la catégorie 2, (ii) déterminer un positionnement du pneumatique marqué non vulcanisé dans le moule M pour compenser au moins partiellement l'une ou plusieurs imperfections d'équilibre de ce pneumatique, positionner en conséquence le pneumatique dans le moule de pneumatique en vue d'opérer (d) ;
   - lorsque le pneumatique non vulcanisé a été classifié dans la catégorie 3, (iii) opérer un équilibrage dynamique en ajoutant ou en retirant un ou plusieurs éléments de gomme sur le pneumatique marqué non vulcanisé, obtenant un pneumatique modifié marqué non vulcanisé, et effectuer (c.1) sur le pneumatique modifié marqué non vulcanisé ;
dans laquelle (c.2)(i) comprend
la prise en charge du pneumatique marqué non vulcanisé par un dispositif automatisé de manutention de pneumatique et la disposition du pneumatique non vulcanisé dans le moule M ;
dans laquelle (c.2)(ii) comprend
(ii.1) la détermination de coordonnées du repère R pour le positionnement du pneumatique marqué non vulcanisé dans le moule M, ayant une forme interne arrondie, comprenant
le traitement des données de la force variation du pneumatique obtenue selon (c.0), de données de l'équilibre dynamique obtenues selon (c.1) et de données sur une ou plusieurs déviations de la forme interne du moule M par un système de traitement de données permettant de déterminer les coordonnées du repère R pour le positionnement dans le moule M pour compenser au moins partiellement la ou lesdites déviations de la forme interne du moule et au moins partiellement l'une ou plusieurs imperfections d'équilibre de ce pneumatique ;
(ii.2) la prise en charge du pneumatique marqué non vulcanisé par un dispositif automatisé de manutention de pneumatique et la disposition du pneumatique non vulcanisé dans le moule M d'après les coordonnées déterminées selon (c.2)(ii.1).

De préférence la détermination d'une variation de force radiale selon (c.0) est
la détermination d'une variation de force radiale du pneumatique marqué non vulcanisé aux différentes positions circonférentielles de ce pneumatique, mesurées en degré par rapport au repère R sur le pneumatique non vulcanisé, comprenant
la mesure de la force radiale par l'intermédiaire d'un capteur C1 lors de l'application d'une force de presse sur la surface externe de la bande de roulement du pneumatique aux différentes positions circonférentielles mesurées en degré par rapport au repère R sur le pneumatique non vulcanisé, lorsque le pneumatique marqué non vulcanisé tourne, obtenant des données sur la variation de force radiale du pneumatique par rapport aux positions circonférentielles.

Par exemple, pour la mesure de force radiale du pneumatique marqué, le capteur C1, de préférence un capteur d'essieu, est monté sur un assemblage AP comprenant un rouleau de pression. Le rouleau de pression a pour fonction d'appliquer une pression suffisante à la surface circonférentielle externe du pneumatique marqué non vulcanisé. Le rouleau de pression est de forme cylindrique. Un capteur d'essieu approprié pour être utilisé avec la présente invention est fabriqué par notamment Honigmann et vendu sous le nom commercial RFS 150. Chaque capteur d'essieu possède de préférence une broche de sorte qu'il tourne avec le rouleau et soit capable de détecter les forces radiales. Ainsi, pendant que le rouleau effectue son application de pression sur la bande de roulement du pneumatique non vulcanisé, ou communément appelé pneumatique vert, les capteurs d'essieu mesurent la variation de la force radiale lorsque le pneumatique marqué non vulcanisé tourne.

Dans le contexte de la présente invention, le système de mesure de force radiale du pneumatique marqué non vulcanisé peut se faire simultanément avec une étape de couture (en anglais « stitching ») de la bande de roulement en utilisant un rouleau piqueur qui a pour fonction d'appliquer une pression suffisante pour garantir que la bande de roulement adhère suffisamment à la surface circonférentielle externe de la carcasse.

Dans le contexte de la présente demande, la détermination de la force radiale d'un pneumatique non vulcanisé peut se faire selon les techniques connues de l'homme du métier comme par exemple celle qui est décrite dans le brevet EP 3 960 433 B1.

De préférence, la mesure de la force radiale se fait à chaque degré aux différentes positions circonférentielles.

De préférence, la mesure de la force radiale se fait à la ligne centrale de la bande de roulement du pneumatique non vulcanisé.

De préférence, l'amplitude de la variation de la force radiale est dans la gamme de 0 N à 200 N. Optionnellement, une alerte peut être mise en place si la variation de la force radiale dépasse une valeur seuil définie, afin d'ajuster les propriétés de construction du pneumatique.

De préférence, les déviations de la forme interne du moule M sont mesurées aux différentes positions circonférentielles au centre de la couronne périphérique du moule.

De préférence la mesure de la force radiale du pneumatique marqué non vulcanisé se fait sur le tambour de fabrication de pneumatique.

De préférence la détermination des coordonnées du repère R pour le positionnement du pneumatique marqué non vulcanisé dans le moule M selon (c.2)(ii.1) est mise en œuvre par un ordinateur.

De préférence, la détermination de coordonnées du repère R pour le positionnement du pneumatique marqué non vulcanisé dans le moule M est la détermination d'un angle α, en degré, de rotation du pneumatique marqué non vulcanisé dans le moule M par rapport à un point 0 localisé sur la surface périphérique du moule M qui a servi de point de départ pour la mesure des déviations de la forme interne du moule, permettant de compenser au moins partiellement les déviations de la forme de ce moule M et au moins partiellement l'une ou plusieurs imperfections d'équilibre pour lesquelles une correction convient comme identifiées selon (c.1).

De préférence le contrôle qualité opéré selon (c.1) et la détermination du positionnement du pneumatique dans le moule selon (c.2) sont opérés à l'aide d'un moyen de traitement électronique des données TED. Ce moyen peut par exemple utilisé l'intelligence artificielle.

Optionnellement, après (c) et avant (d), la méthode comprend l'utilisation d'un ou plusieurs tapis roulants.

De préférence le dispositif automatisé de manutention de pneumatique utilisé selon (c)(ii.2) est connecté à un réseau et éventuellement avec des unités de préparation de pneumatiques non vulcanisés, plus préférablement les unités de préparation de pneumatiques décrites dans la présente.

De préférence, le réseau est un réseau interne, comme intranet, ou un réseau externe, de manière plus préférée un réseau interne.

De préférence le moule de pneumatique M comprend deux parties latérales, chacune servant au moulage extérieur d'un flanc du pneumatique et une couronne périphérique divisée en au moins deux segments, plus préférablement divisée en 3 à 20 segments, plus préférablement en 5 à 15 segments, plus préférablement en 6 à 10 segments. Un exemple d'assemblage de segments formant le moule M est illustré à la FIG. 2.

De préférence, une vessie de vulcanisation est utilisée dans le moule M, notamment pour mouler la forme interne du pneumatique.

Dans le contexte de la présente invention, la couronne périphérique est destinée à mouler la surface radialement externe de la bande de roulement.

Optionnellement, le moule de pneumatique M est connecté à un réseau, à savoir un réseau interne, comme un intranet, ou un réseau externe, et au dispositif automatisé de manutention du pneumatique. Le moule M peut en outre être connecté aux unités de préparation du pneumatique définies dans cette invention.

Dans le contexte de la présente invention, le terme « forme interne » relative au moule M signifie la forme de la partie interne du moule M, à savoir la partie interne du moule qui accueille et est en contact avec le pneumatique marqué non vulcanisé.

De préférence la méthode de la présente invention comprend en outre une ou plusieurs étapes de stockage. De préférence, l'une ou plusieurs étapes intermédiaire de stockage sont automatisées.

De préférence la méthode comprend l'utilisation d'un ou plusieurs jumeaux numériques.

De préférence, l'un ou plusieurs jumeaux numériques se basent sur des données numériques de conception de pneumatiques, des données recueillies par l'Internet des Objets et d'une interface Homme-machine qui met en corrélation et présente les données pour favoriser la prise de décision. De préférence, la prise de décision est automatisée.

De préférence la méthode de la présente invention est une méthode continue ou semi-continue.

La présente invention concerne en outre un système ou une usine pour réaliser la méthode de préparation de pneumatique selon la présente invention, comprenant
au moins un tambour de fabrication de pneumatique ;
au moins un moyen pour l'assemblage des composants de pneumatique sur le tambour de fabrication ;
un moyen pour la mise en place d'un repère matérialisé R sur le pneumatique non vulcanisé; un moule de pneumatique M ;
au moins un moyen pour opérer le contrôle qualité comprenant un appareil de mesure de l'équilibre dynamique, un moyen pour la classification de pneumatique ;
un moyen pour déterminer le positionnement du pneumatique marqué non vulcanisé dans le moule M ;
un ou plusieurs dispositifs automatisés de manutention de pneumatique permettant la prise en charge du pneumatique marqué non vulcanisé, le déplacement du pneumatique et la mise en place du pneumatique dans le moule M ;
un moyen pour opérer un équilibrage dynamique ;
un moyen de chauffe pour la vulcanisation du pneumatique ;
et un système de traitement de données provenant du moyen pour opérer le contrôle qualité.

De préférence, le système ou l'usine comprend en outre au moins un moyen pour la fourniture des composants de pneumatiques. Le au moins un moyen pour la fourniture des composants de pneumatiques étant de préférence plusieurs unités de préparation de pneumatiques non vulcanisés.

De préférence, les unités de préparation comprennent une ou plusieurs unités de mélange, une ou plusieurs unités d'extrusion, une ou plusieurs unités de coupe, une ou plusieurs unités d'enroulement de perles/tringles (en anglais « beads ») et d'apex, et/ou une ou plusieurs unités d'assemblage.

De préférence, le système ou l'usine comprend en outre un moyen pour éditer le repère matérialisé R.

De préférence, R est une étiquette avec un code barre ou un QR code.

De préférence, le système ou l'usine comprend en outre un réseau permettant la liaison entre le dispositif automatisée de manutention de pneumatique et une ou plusieurs desdits moyens, plus préférablement un réseau interne du type intranet.

De préférence le système ou l'usine comprend en outre un moyen pour la détermination d'une variation de force radiale du pneumatique marqué non vulcanisé aux différentes positions circonférentielles de ce pneumatique pour obtenir des données sur la variation de force radiale par rapport aux positions circonférentielles.

De préférence, le système ou l'usine comprend en outre un capteur C1, et de préférence un rouleau de presse, pour la détermination de la mesure de la force radiale sur le pneumatique marqué non vulcanisé.
De préférence, le système ou l'usine comprend en outre un ou plusieurs tapis roulants.

De préférence, le système ou l'usine comprend en outre au moins un deuxième dispositif automatisé de manutention de pneumatiques.

De préférence, le système ou l'usine comprend en outre au moins un moyen de stockage de pneumatiques, plus préférablement au moins un moyen de stockage de pneumatiques non vulcanisés et au moins un moyen de stockage de pneumatiques vulcanisés.

La présente invention concerne en outre un pneumatique vulcanisé pouvant être obtenu ou obtenu par une méthode selon la présente invention.

Dans le contexte de la présente invention, pour la caractéristique « lorsque le pneumatique non vulcanisé a été classifié dans la catégorie 1, positionner le pneumatique marqué non vulcanisé dans le moule M de pneumatique », le positionnement se fait en position standard (ou par défaut) comme dans les procédés de fabrication de pneumatique de l'art antérieur. La position par défaut est de préférence celle qui consiste à aligner le repère R sur le pneumatique marqué non vulcanisé et le point 0 du moule M.

Dans le contexte de la présente invention, les termes « radial » et « radialement » désignent les directions radiales vers ou à partir de l'axe de rotation du pneumatique.

Dans le contexte de la présente invention, le terme « forme interne » relative au moule M signifie la forme de la partie interne du moule M, à savoir la partie interne du moule qui accueille le pneumatique marqué non vulcanisé.

Dans le contexte de la présente invention, le terme « jumeau numérique » se dit d'une représentation virtuelle d'un produit ou d'un procédé qui permet de comprendre et de prévoir ses équivalents physiques afin d'améliorer un objet ou une méthode.

La présente invention est en outre illustrée par l'ensemble suivant de modes de réalisation et de combinaisons de modes de réalisation résultant des dépendances et des références arrière comme indiqué. En particulier, il convient de noter que dans chaque cas où une gamme de modes de réalisation est mentionnée, par exemple dans le contexte d'un terme tel que « La méthode de l'un quelconque des modes de réalisation 1 à 3 », chaque mode de réalisation dans cette gamme est censé être explicitement divulgué à l'homme du métier, c'est-à-dire que la formulation de ce terme doit être comprise par l'homme du métier comme étant synonyme de « la méthode de l'un quelconque des modes de réalisation 1, 2 et 3 ». En outre, il est explicitement noté que l'ensemble de modes de réalisation suivant représente une partie convenablement structurée de la description générale dirigée vers des aspects préférés de la présente invention et, par conséquent, soutient de manière appropriée, mais ne représente pas les revendications de la présente invention. invention.

Selon le mode de réalisation 1 de la présente invention, une méthode de la présente invention pour la préparation d'un pneumatique comprend
(a) préparer un pneumatique non vulcanisé, comprenant
   l'assemblage des composants de pneumatique sur un tambour de fabrication de pneumatique ;
(b) apposer un repère ou un repère matérialisé R sur le pneumatique non vulcanisé préparé selon (a), obtenant un pneumatique marqué non vulcanisé ;
(c) mise en place du pneumatique marqué non vulcanisé obtenu selon (b) dans un moule M de pneumatique, comprenant
(c.1) opérer un contrôle de la qualité du pneumatique marqué non vulcanisé obtenu selon (b), comprenant
(c.1.1) la mesure de l'équilibre dynamique du pneumatique marqué non vulcanisé avec un appareil de mesure, comprenant l'identification de potentiels imperfections d'équilibre sur ledit pneumatique marqué non vulcanisé ;
(c.1.2) la classification du pneumatique marqué non vulcanisé sur la base de la mesure de l'équilibre dynamique selon (c.1.1) en au moins trois catégories, plus préférablement en trois catégories :
   - une catégorie 1 lorsque le pneumatique marqué non vulcanisé est conforme aux limites des spécifications et ne présente pas d'imperfection d'équilibre, ou présente une ou plusieurs imperfections d'équilibre qui ne nécessitent cependant pas de correction ;
   - une catégorie 2 lorsque le pneumatique marqué non vulcanisé est conforme aux limites des spécifications mais présente une ou plusieurs imperfections d'équilibre pour lesquelles il convient de faire une correction ;
   - une catégorie 3 lorsque le pneumatique marqué non vulcanisé est non conforme aux limites des spécifications et présente une ou plusieurs imperfections d'équilibre qui nécessitent correction ;
dans laquelle (c) comprend en outre
(c.2) comprenant
   - lorsque le pneumatique non vulcanisé a été classifié dans la catégorie 1, positionner le pneumatique marqué non vulcanisé dans le moule M de pneumatique en vue d'opérer (d) ;
   - lorsque le pneumatique non vulcanisé a été classifié dans la catégorie 2, déterminer un positionnement du pneumatique marqué non vulcanisé dans le moule de pneumatique pour compenser au moins partiellement l'une ou plusieurs imperfections d'équilibre de ce pneumatique, positionner en conséquence le pneumatique dans le moule M de pneumatique en vue d'opérer (d) ;
   - lorsque le pneumatique non vulcanisé a été classifié dans la catégorie 3, opérer un équilibrage dynamique en ajoutant ou en retirant un ou plusieurs éléments de gomme sur le pneumatique marqué non vulcanisé, obtenant un pneumatique modifié marqué non vulcanisé, et opérer (c.1) sur le pneumatique modifié marqué non vulcanisé ;
(d) la vulcanisation du pneumatique marqué non vulcanisé positionné selon (c) dans le moule M.

Mode de réalisation 2 : La méthode selon le mode de réalisation 1, dans laquelle les composants de pneumatique comprennent une carcasse de pneumatique, des flancs de pneumatique et une bande de roulement, de préférence l'assemblage comprend la mise en place de la carcasse sur le tambour de fabrication et la mise en place des flancs et de la bande de roulement sur la carcasse, les mises en place se faisant par rapport à un point de référence, plus préférablement les composant de pneumatique comprennent en outre une ou plusieurs parmi une ou plusieurs ceintures, et des épaulements.

Mode de réalisation 3 : La méthode selon le mode de réalisation 1 ou 2, dans laquelle la méthode comprend en outre la fourniture des composants de pneumatique utilisés selon (a) comprenant la préparation des composants de pneumatique, de préférence la préparation des composants de carcasse, la préparation des flancs et la préparation de la bande de roulement.

Mode de réalisation 4 : La méthode selon le mode de réalisation 3, dans laquelle la préparation des composants de pneumatique comprend l'utilisation de plusieurs unités de préparation de pneumatiques non vulcanisés, dans laquelle les unités de préparation sont connectées les unes aux autres par un réseau, le réseau étant de préférence un réseau interne, par exemple un intranet, ou un réseau externe.

Mode de réalisation 5 : La méthode selon l'un quelconque des modes de réalisations 1 à 4, dans laquelle selon (a) l'assemblage des composants de pneumatique est automatisé.

Mode de réalisation 6 : La méthode selon l'un quelconque des modes de réalisations 1 à 5, dans laquelle l'apposition d'un repère matérialisé R selon (b) se fait sur un des flancs du pneumatique non vulcanisé préparé selon (a), de préférence à une distance d1 dudit point de référence décrit au mode de réalisation 2.

Mode de réalisation 7 : La méthode selon l'un quelconque des modes de réalisations 1 à 6, dans laquelle l'apposition d'un repère matérialisé R selon (b) est automatisée.

Mode de réalisation 8 : La méthode selon l'un quelconque des modes de réalisations 1 à 7, dans laquelle le repère matérialisé R est une étiquette avec un code barre ou un QR code.

Mode de réalisation 9 : La méthode selon le mode de réalisation 8, dans laquelle la méthode comprend la lecture du code barre ou du QR code du repère R avant d'opérer (c).

Mode de réalisation 10 : La méthode selon l'un quelconque des modes de réalisations 1 à 9, dans laquelle l'apposition d'un repère matérialisé R selon (b) se fait sur le pneumatique non vulcanisé préparé selon (a), le pneumatique étant lui-même positionné sur le tambour de fabrication.

Mode de réalisation 11 : La méthode selon l'un quelconque des modes de réalisations 1 à 10, dans laquelle l'appareil de mesure utilisé selon (c.1.1) comprend un bras robotisé ou le tambour de fabrication de pneumatique.

Mode de réalisation 12 : La méthode selon le mode de réalisation 11, dans laquelle le bras robotisé est rotatif et comprend un ou plusieurs capteurs permettant de déterminer le balourd du pneumatique marqué non vulcanisé.

Mode de réalisation 13 : La méthode selon l'un quelconque des modes de réalisations 1 à 12, dans laquelle l'appareil de mesure utilisé selon (c.1.1) comprend en outre un moyen de traitement des mesures effectués par un ou plusieurs capteurs, de préférence l'un ou plusieurs capteurs définis selon le mode de réalisation 13, pour la classification selon (c.1.2) du pneumatique marqué.

Mode de réalisation 14 : La méthode selon l'un quelconque des modes de réalisations 1 à 13, dans laquelle l'ajout ou le retrait de l'un ou plusieurs éléments de gomme lors de l'équilibrage dynamique se fait sur la surface externe et/ou interne du pneumatique.

Mode de réalisation 15 : La méthode selon l'un quelconque des modes de réalisations 1 à 14, dans laquelle (c) comprend en outre
(c.0) la détermination d'une variation de force radiale du pneumatique marqué non vulcanisé aux différentes positions circonférentielles de ce pneumatique, mesurées en degré, par rapport au repère R sur le pneumatique marqué non vulcanisé, obtenant des données sur la variation de force radiale du pneumatique non vulcanisé par rapport aux positions circonférentielles;
dans laquelle (c.0) est opéré avant (c.1).

Mode de réalisation 16 : La méthode selon le mode de réalisation 15, dans laquelle (c) comprend
(c.0) la détermination d'une variation de force radiale du pneumatique marqué non vulcanisé aux différentes positions circonférentielles de ce pneumatique, mesurées en degré, par rapport au repère R sur le pneumatique marqué non vulcanisé, obtenant des données sur la variation de force radiale du pneumatique non vulcanisé par rapport aux positions circonférentielles;
(c.1) opérer un contrôle de la qualité du pneumatique marqué non vulcanisé obtenu selon (b), comprenant
(c.1.1) la mesure de l'équilibre dynamique du pneumatique marqué non vulcanisé avec un appareil de mesure, comprenant l'identification de potentiels imperfections d'équilibre sur ledit pneumatique marqué non vulcanisé ;
(c.1.2) la classification du pneumatique marqué non vulcanisé sur la base de la mesure de l'équilibre dynamique selon (c.1.1) en au moins trois catégories, de préférence trois catégories :
   - une catégorie 1 lorsque le pneumatique marqué non vulcanisé est conforme aux limites des spécifications et ne présente pas d'imperfection d'équilibre, ou présente une ou plusieurs imperfections d'équilibre qui ne nécessitent cependant pas de correction ;
   - une catégorie 2 lorsque le pneumatique marqué non vulcanisé est conforme aux limites des spécifications mais présente une ou plusieurs imperfections d'équilibre pour lesquelles il convient de faire une correction ;
   - une catégorie 3 lorsque le pneumatique marqué non vulcanisé est non conforme aux limites des spécifications et présente une ou plusieurs imperfections d'équilibre qui nécessitent correction ;
(c.2) comprenant
   - lorsque le pneumatique non vulcanisé a été classifié dans la catégorie 1, (i) positionner le pneumatique marqué non vulcanisé dans le moule de pneumatique en vue d'opérer (d) ;
   - lorsque le pneumatique non vulcanisé a été classifié dans la catégorie 2, (ii) déterminer un positionnement du pneumatique marqué non vulcanisé dans le moule M de pneumatique pour compenser au moins partiellement l'une ou plusieurs imperfections d'équilibre de ce pneumatique, positionner en conséquence le pneumatique dans le moule de pneumatique en vue d'opérer (d) ;
   - lorsque le pneumatique non vulcanisé a été classifié dans la catégorie 3, (iii) opérer un équilibrage dynamique en ajoutant ou en retirant un ou plusieurs éléments de gomme sur le pneumatique marqué non vulcanisé, obtenant un pneumatique modifié marqué non vulcanisé, et effectuer (c.1) sur le pneumatique modifié marqué non vulcanisé ;
dans laquelle (c.2)(i) comprend
la prise en charge du pneumatique marqué non vulcanisé par un dispositif automatisé de manutention de pneumatique et la disposition du pneumatique non vulcanisé dans le moule M ;
dans laquelle (c.2)(ii) comprend
(ii.1) la détermination de coordonnées du repère R pour le positionnement du pneumatique marqué non vulcanisé dans le moule M, ayant une forme interne arrondie, comprenant
le traitement des données de la force variation du pneumatique obtenue selon (c.0), de données de l'équilibre dynamique obtenues selon (c.1) et de données sur une ou plusieurs déviations de la forme interne du moule M par un système de traitement de données permettant de déterminer les coordonnées du repère R pour le positionnement dans le moule M pour compenser au moins partiellement la ou lesdites déviations de la forme interne du moule et au moins partiellement l'une ou plusieurs imperfections d'équilibre de ce pneumatique ;
(ii.2) la prise en charge du pneumatique marqué non vulcanisé par un dispositif automatisé de manutention de pneumatique et la disposition du pneumatique non vulcanisé dans le moule M d'après les coordonnées déterminées selon (c.2)(ii.1).

Mode de réalisation 17 : La méthode selon le mode de réalisation 15 ou 16, dans laquelle la détermination d'une variation de force radiale selon (c.0) est la détermination d'une variation de force radiale du pneumatique marqué non vulcanisé aux différentes positions circonférentielles de ce pneumatique, mesurées en degré par rapport au repère R sur le pneumatique non vulcanisé, comprenant
la mesure de la force radiale par l'intermédiaire d'un capteur C1 lors de l'application d'une force de presse sur la surface externe de la bande de roulement du pneumatique aux différentes positions circonférentielles mesurées en degré par rapport au repère R sur le pneumatique non vulcanisé, lorsque le pneumatique marqué non vulcanisé tourne, obtenant des données sur la variation de force radiale du pneumatique par rapport aux positions circonférentielles.

Mode de réalisation 18 : La méthode selon le mode de réalisation 17, dans laquelle la mesure de la force radiale du pneumatique marqué non vulcanisé se fait sur le tambour de fabrication de pneumatique.

Mode de réalisation 19 : La méthode selon l'un quelconque des modes de réalisations 15 à 18, dans laquelle la détermination des coordonnées du repère R pour le positionnement du pneumatique marqué non vulcanisé dans le moule M selon (ii) est mise en œuvre par un ordinateur.

Mode de réalisation 20 : La méthode selon l'un quelconque des modes de réalisations 1 à 19, dans laquelle le dispositif automatisé de manutention de pneumatique utilisé selon (c)(ii.2) est connecté à un réseau et éventuellement avec des unités de préparation de pneumatiques non vulcanisés.

Mode de réalisation 21 : Le méthode selon l'un quelconque des modes de réalisations 1 à 20, dans laquelle le moule de pneumatique M comprend deux parties latérales, chacune servant au moulage extérieur d'un flanc du pneumatique et une couronne périphérique divisée en au moins deux segments, de préférence divisée en 3 à 20 segments, plus préférablement en 5 à 15 segments, plus préférablement en 6 à 10 segments.

Mode de réalisation 22 : Le méthode selon l'un quelconque des modes de réalisations 1 à 21, comprenant en outre une ou plusieurs étapes de stockage.

Mode de réalisation 23 : La méthode selon l'un quelconque des modes de réalisations 1 à 22, dans laquelle la méthode comprend l'utilisation d'un ou plusieurs jumeaux numériques.

Mode de réalisation 24 : La méthode selon l'un quelconque des modes de réalisations 1 à 23, étant une méthode continue ou semi-continue.

Mode de réalisation 25: Un système ou une usine pour réaliser la méthode de préparation de pneumatique selon l'un quelconque des modes de réalisations 1 à 24, comprenant
au moins un tambour de fabrication de pneumatique ;
au moins un moyen pour l'assemblage des composants de pneumatique sur le tambour de fabrication;
un moyen pour la mise en place d'un repère matérialisé R sur le pneumatique non vulcanisé; un moule de pneumatique M ;
au moins un moyen pour opérer le contrôle qualité comprenant un appareil de mesure de l'équilibre dynamique et un moyen pour la classification de pneumatique ;
un moyen pour déterminer le positionnement du pneumatique marqué non vulcanisé dans le moule M ;
un ou plusieurs dispositifs automatisés de manutention de pneumatique permettant la prise en charge du pneumatique marqué non vulcanisé, le déplacement du pneumatique et la mise en place du pneumatique dans le moule M ;
un moyen pour opérer un équilibrage dynamique ;
un moyen de chauffe pour la vulcanisation du pneumatique ;
et un système de traitement de données.

Mode de réalisation 26 : Un pneumatique vulcanisé pouvant être obtenu ou obtenu par une méthode selon l'un quelconque des modes de réalisations 1 à 24.

### Description des figures

La FIG.1 représente un dessin d'une vue d'un côté du pneumatique non vulcanisé 1 marqué d'un repère R et placé sur un tambour 7 de fabrication de pneumatiques obtenu selon (ii) de la méthode de la présente invention. Sur la figure sont représentés la bande de roulement 3, le flanc 5 et le point de référence PR sur le tambour 7.
La FIG.2 représente le positionnement de 7 segments (S) formant un moule M de fabrication de pneumatiques pouvant être utilisé dans la présente invention.

## Revendications

1. Une méthode pour la préparation d'un pneumatique, la méthode comprenant
(a) préparer un pneumatique non vulcanisé, comprenant l'assemblage des composants de pneumatique sur un tambour de fabrication de pneumatique ;
(b) apposer un repère sur le pneumatique non vulcanisé préparé selon (a), obtenant un pneumatique marqué non vulcanisé ;
(c) mise en place du pneumatique marqué non vulcanisé obtenu selon (b) dans un moule M de pneumatique, comprenant
(c.1) opérer un contrôle de la qualité du pneumatique marqué non vulcanisé obtenu selon (b), comprenant
(c.1.1) la mesure de l'équilibre dynamique du pneumatique marqué non vulcanisé avec un appareil de mesure, comprenant l'identification de potentiels imperfections d'équilibre sur ledit pneumatique marqué non vulcanisé ;
(c.1.2) la classification du pneumatique marqué non vulcanisé sur la base de la mesure de l'équilibre dynamique selon (c.1.1) en au moins trois catégories :
- une catégorie 1 lorsque le pneumatique marqué non vulcanisé est conforme aux limites des spécifications et ne présente pas d'imperfection d'équilibre, ou présente une ou plusieurs imperfections d'équilibre qui ne nécessitent cependant pas de correction ;
- une catégorie 2 lorsque le pneumatique marqué non vulcanisé est conforme aux limites des spécifications mais présente une ou plusieurs imperfections d'équilibre pour lesquelles il convient de faire une correction ;
- une catégorie 3 lorsque le pneumatique marqué non vulcanisé est non conforme aux limites des spécifications et présente une ou plusieurs imperfections d'équilibre qui nécessitent correction ;
dans laquelle (c) comprend en outre
(c.2) comprenant
- lorsque le pneumatique non vulcanisé a été classifié dans la catégorie 1, positionner le pneumatique marqué non vulcanisé dans le moule M de pneumatique en vue d'opérer (d) ;
- lorsque le pneumatique non vulcanisé a été classifié dans la catégorie 2, déterminer un positionnement du pneumatique marqué non vulcanisé dans le moule de pneumatique pour compenser au moins partiellement l'une ou plusieurs imperfections d'équilibre de ce pneumatique, positionner en conséquence le pneumatique dans le moule M de pneumatique en vue d'opérer (d) ;
- lorsque le pneumatique non vulcanisé a été classifié dans la catégorie 3, opérer un équilibrage dynamique en ajoutant ou en retirant un ou plusieurs éléments de gomme sur le pneumatique marqué non vulcanisé, obtenant un pneumatique modifié marqué non vulcanisé, et opérer (c.1) sur le pneumatique modifié marqué non vulcanisé ;
(d) la vulcanisation du pneumatique marqué non vulcanisé positionné selon (c) dans le moule M.

2. La méthode selon la revendication 1, dans laquelle le repère est un repère matérialisé R.

3. La méthode selon la revendication 1 ou 2, dans laquelle l'apposition d'un repère ou d'un repère matérialisé R selon (b) est automatisée.

4. La méthode selon l'une quelconque des revendications 2 ou 3, dans laquelle le repère matérialisé R est une étiquette avec un code barre ou un QR code.

5. La méthode selon la revendication 4, dans laquelle la méthode comprend la lecture du code barre ou du QR code du repère R avant d'opérer (c) et dans laquelle (c) comprend en outre l'association des données du contrôle qualité selon (c.1) au code barre ou au QR code dans un système informatique.

6. La méthode selon l'une quelconque des revendications 1 à 5, dans laquelle l'appareil de mesure utilisé selon (c.1.1) comprend un bras robotisé ou le tambour de fabrication de pneumatique.

7. La méthode selon la revendication 6, dans laquelle le bras robotisé est rotatif et comprend un ou plusieurs capteurs permettant de déterminer le balourd du pneumatique marqué non vulcanisé.

8. La méthode selon l'une quelconque des revendications 1 à 7, dans laquelle l'appareil de mesure utilisé selon (c.1.1) comprend en outre un moyen de traitement des mesures effectuées par un ou plusieurs capteurs, de préférence l'un ou plusieurs capteurs définis selon la revendication 7, pour la classification selon (c.1.2) du pneumatique marqué.

9. La méthode selon l'une quelconque des revendications 1 à 8, dans laquelle (c) comprend en outre
(c.0) la détermination d'une variation de force radiale du pneumatique marqué non vulcanisé aux différentes positions circonférentielles de ce pneumatique, mesurées en degré, par rapport au repère sur le pneumatique marqué non vulcanisé, obtenant des données sur la variation de force radiale du pneumatique non vulcanisé par rapport aux positions circonférentielles;
dans laquelle (c.0) est opéré avant (c.1).

10. La méthode selon la revendication 9, dans laquelle (c) comprend
(c.0) la détermination d'une variation de force radiale du pneumatique marqué non vulcanisé aux différentes positions circonférentielles de ce pneumatique, mesurées en degré, par rapport au repère sur le pneumatique marqué non vulcanisé, obtenant des données sur la variation de force radiale du pneumatique non vulcanisé par rapport aux positions circonférentielles;
(c.1) opérer un contrôle de la qualité du pneumatique marqué non vulcanisé obtenu selon (b), comprenant
(c.1.1) la mesure de l'équilibre dynamique du pneumatique marqué non vulcanisé avec un appareil de mesure, comprenant l'identification de potentiels imperfections d'équilibre sur ledit pneumatique marqué non vulcanisé ;
(c.1.2) la classification du pneumatique marqué non vulcanisé sur la base de la mesure de l'équilibre dynamique selon (c.1.1) en au moins trois catégories, de préférence trois catégories :
- une catégorie 1 lorsque le pneumatique marqué non vulcanisé est conforme aux limites des spécifications et ne présente pas d'imperfection d'équilibre, ou présente une ou plusieurs imperfections d'équilibre qui ne nécessitent cependant pas de correction ;
- une catégorie 2 lorsque le pneumatique marqué non vulcanisé est conforme aux limites des spécifications mais présente une ou plusieurs imperfections d'équilibre pour lesquelles il convient de faire une correction ;
- une catégorie 3 lorsque le pneumatique marqué non vulcanisé est non conforme aux limites des spécifications et présente une ou plusieurs imperfections d'équilibre qui nécessitent correction ;
(c.2) comprenant
- lorsque le pneumatique non vulcanisé a été classifié dans la catégorie 1, (i) positionner le pneumatique marqué non vulcanisé dans le moule de pneumatique en vue d'opérer (d) ;
- lorsque le pneumatique non vulcanisé a été classifié dans la catégorie 2, (ii) déterminer un positionnement du pneumatique marqué non vulcanisé dans le moule M pour compenser au moins partiellement l'une ou plusieurs imperfections d'équilibre de ce pneumatique, positionner en conséquence le pneumatique dans le moule de pneumatique en vue d'opérer (d) ;
- lorsque le pneumatique non vulcanisé a été classifié dans la catégorie 3, (iii) opérer un équilibrage dynamique en ajoutant ou en retirant un ou plusieurs éléments de gomme sur le pneumatique marqué non vulcanisé, obtenant un pneumatique modifié marqué non vulcanisé, et effectuer (c.1) sur le pneumatique modifié marqué non vulcanisé ;
dans laquelle (c.2)(i) comprend
la prise en charge du pneumatique marqué non vulcanisé par un dispositif automatisé de manutention de pneumatique et la disposition du pneumatique non vulcanisé dans le moule M ;
dans laquelle (c.2)(ii) comprend
(ii.1) la détermination de coordonnées du repère R pour le positionnement du pneumatique marqué non vulcanisé dans le moule M, ayant une forme interne arrondie, comprenant le traitement des données de la force variation du pneumatique obtenue selon (c.0), de données de l'équilibre dynamique obtenues selon (c.1) et de données sur une ou plusieurs déviations de la forme interne du moule M par un système de traitement de données permettant de déterminer les coordonnées du repère R pour le positionnement dans le moule M pour compenser au moins partiellement la ou lesdites déviations de la forme interne du moule et au moins partiellement l'une ou plusieurs imperfections d'équilibre de ce pneumatique ;
(ii.2) a prise en charge du pneumatique marqué non vulcanisé par un dispositif automatisé de manutention de pneumatique et la disposition du pneumatique non vulcanisé dans le moule M d'après les coordonnées déterminées selon (c.2)(ii.1).

11. La méthode selon l'une quelconque des revendications 1 à 10, dans laquelle la méthode comprend l'utilisation d'un ou plusieurs jumeaux numériques.

12. Un système ou une usine pour réaliser la méthode de préparation de pneumatique selon l'une quelconque des revendications 1 à 11, comprenant
au moins un tambour de fabrication de pneumatique ;
au moins un moyen pour l'assemblage des composants de pneumatique sur le tambour de fabrication ;
un moyen pour la mise en place d'un repère ou d'un repère matérialisé R sur le pneumatique non vulcanisé ;
un moule de pneumatique M ;
au moins un moyen pour opérer le contrôle qualité comprenant un appareil de mesure de l'équilibre dynamique et un moyen pour la classification de pneumatique ;
un moyen pour déterminer le positionnement du pneumatique marqué non vulcanisé dans le moule M ;
un ou plusieurs dispositifs automatisés de manutention de pneumatique permettant la prise en charge du pneumatique marqué non vulcanisé, le déplacement du pneumatique et la mise en place du pneumatique dans le moule M ;
un moyen pour opérer un équilibrage dynamique ;
un moyen de chauffe pour la vulcanisation du pneumatique ;
et un système de traitement de données.
